# EUROPÄISCHE PATENTSCHRIFT

(11) **EP 3 046 891 B1**
(45) Veröffentlichungstag und Bekanntmachung des Hinweises auf die Patenterteilung: **16.08.2017**
(21) Anmeldenummer: 14772108.8
(22) Anmeldetag: 19.09.2014
(51) Int. Cl.: C04B 35/52, C04B 38/00, C04B 38/04, C04B 35/63, C04B 35/638

(54) **VERFAHREN ZUR HERSTELLUNG EINES PORÖSEN KOHLENSTOFFERZEUGNISSES**
METHOD FOR PRODUCING A POROUS CARBON PRODUCT
PROCÉDÉ DE FABRICATION D'UN PRODUIT POREUX À BASE DE CARBONE

(30) Priorität: 20.09.2013 DE 102013110453
(43) Veröffentlichungstag der Anmeldung: 27.07.2016
(73) Patentinhaber: Heraeus Quarzglas GmbH & Co. KG, 63450 Hanau (DE)
(72) Erfinder: NEUMANN, Christian, 35410 Hungen (DE); OTTER, Matthias, D-59075 Hamm (DE); BECKER, Jörg, 61194 Niddatal (DE); PIHAN, Sascha, 63743 Aschaffenburg (DE)
(74) Vertreter: Staudt, Armin Walter
(86) Internationale Anmeldenummer: PCT/EP2014/070044
(87) Internationale Veröffentlichungsnummer: WO 2015/040186

(56) Entgegenhaltungen:
- DE-A1- 2 946 688
- US-A1- 2005 169 829
- US-A1- 2014 107 371

## Beschreibung

### Technisches Gebiet

Die vorliegende Erfindung betrifft ein Verfahren zur Herstellung eines porösen Kohlenstofferzeugnisses, umfassend folgende Verfahrensschritte:
(a) Bereitstellen von Templatmaterial in Form von Templat-Partikeln, die Makroporen enthalten,
(b) Bereitstellen einer Vorläufersubstanz für Kohlenstoff,
(c) Infiltrieren der Makroporen des Templats mit der Vorläufersubstanz in geschmolzener oder gelöster Form bei einer Temperatur Ta,
(d) Carbonisieren der Vorläufersubstanz bei einer Temperatur Tc, und
(e) Entfernen des Templats unter Bildung des porösen Kohlenstofferzeugnisses.

Poröser Kohlenstoff wird beispielsweise in Elektroden für Brennstoffzellen, Superkondensatoren, elektrischen Akkumulatoren (Sekundärbatterien) und als Adsorptionsmittel für Flüssigkeiten und Gase, als Speichermedium für Gase, als Trägermaterial in chromatographischen Anwendungen oder katalytischen Prozessen und als Werkstoff im Maschinenbau oder in der Medizintechnik eingesetzt.

### Stand der Technik

Seit langem bekannt sind Bauteile aus porösem Kohlenstoffschaum. Dieser wird durch Erhitzen organischer Ausgangssubstanzen auf Temperaturen zwischen 1000 bis 1500 °C unter Inertgas erhalten. So beschreibt etwa die DE 69934256 T2 ein Verfahren zur Herstellung von offenporigem, im Wesentlichen graphitischem Kohlenstoffschaum durch Erwärmen und Verkoken von Pech unter nichtoxidierenden Bedingungen unter Druck.

Kohlenstoffschaum zeichnet sich durch eine extrem geringe Dichte von weniger als 0,1 g/cm³ und durch eine hohe Temperaturbeständigkeit bis zu 4000 °C unter Inertgas aus. Typische minimale Porengrößen jedoch um 5 µm; für viele Anwendungen werden jedoch Poren im Nanometerbereich und große spezifische Oberflächen benötigt, die mit diesem Werkstoff nicht erreichbar sind.

Aus der DE 29 46 688 A1 sind Verfahren zur Herstellung von porösem Kohlenstoff unter Einsatz einer temporären Vorform aus porösem Material (eines so genannten "Templats") bekannt. Dabei wird eine Vorläufersubstanz für Kohlenstoff in den Poren des "Templats" aus anorganischem Templatmaterial abgelagert, das eine Oberfläche von mindestens 1 m²/g aufweist. Als geeignete Templatmaterialien für das Templat werden SiO₂-Gel, poröses Glas, Aluminiumoxid oder andere poröse hitzebeständige Oxide genannt. Das Templatmaterial hat eine Porosität von mindestens 40 % und eine mittlere Porengröße im Bereich von 3 nm bis 2 µm.

Als Vorläufersubstanz für Kohlenstoff werden polymerisierbare organische Materialien empfohlen, wie etwa einer Mischung aus Phenol und Hexamin oder einem Phenol-Formaldehyd-Resol. Diese wird als Flüssigkeit oder als Gas in die Poren des Templats eingeführt und polymerisiert. Nach der Polymerisierung und anschließender Carbonisierung wird das anorganische Templatmaterial des Templats entfernt, beispielsweise durch Lösen in NaOH oder in Flusssäure.

Auf diese Weise wird ein partikel- oder flockenförmiges Kohlenstofferzeugnis erhalten, das eine Porenstruktur aufweist, dessen Makroporen im Wesentlichen die vormalige Templatstruktur wiedergeben. Diese Kohlenstoffstruktur kann auch Mikroporen enthalten, die durch eine Nachbehandlung, wie Beschichten mit Pyro-Kohlenstoff oder durch Graphitisierung reduziert oder beseitigt werden können. Das Kohlenstofferzeugnis ist für den Einsatz in der Gas-Chromatographie oder als Katalysatorträger geeignet.

Für viele Anwendungen erweist sich jedoch eine so genannte "hierarchische Porenstruktur" als vorteilhaft. Große Oberflächen können durch Poren im Nanometerbereich bereitgestellt werden. Um die Zugänglichkeit zu diesen Poren zu steigern, sind diese idealerweise über ein durchgängiges makroporöses Transportsystem verbunden. Ein monolithisches Kohlenstofferzeugnis mit einer derartigen hierarchischen Porenstruktur aus Makroporen und Mesoporen ist in der US 2005/0169829 A1 beschrieben. Zur Herstellung der hierarchischen Porenstruktur wird ein SiO₂-Templat erzeugt, indem eine Dispersion aus Siliziumdioxidkügelchen mit Durchmessern von 800 nm bis 10 µm und einer polymerisierbaren Substanz in einer Form erhitzt wird, so dass durch Polymerisation ein poröses SilicaGel erhalten wird, das nach dem Entfernen der überschüssigen Flüssigkeit getrocknet und vollständig auspolymerisiert wird.

Die Poren des so erhaltenen SiO₂-Templats werden anschließend mit einer Vorläufersubstanz für Kohlenstoff imprägniert, die Kohlenstoffvorläufersubstanz zu Kohlenstoff carbonisiert und das SiO₂-Templat anschließend durch Lösen in HF oder NaOH entfernt. Auch das so erhaltene Kohlenstofferzeugnis weist eine etwa der Materialverteilung des Templats entsprechende Porenstruktur auf. Als Vorläufersubstanz für Kohlenstoff wird hier in Tetrahydrofuran (THF) gelöstes Phenolkunstharz eingesetzt.

Die gängigen graphitisierbare Kohlenstoff-Vorläufersubstanzen für die Infiltration sind nicht in hoher Konzentration löslich und haben einen Anteil unlöslicher Bestandteile. So liegt beispielsweise die Löslichkeit von Pechen in THF bei weniger als 10 Vol.-%, so dass nach dem Verdampfen des Lösungsmittels mehr als 90% des ursprünglich gefüllten Porenvolumens ungefüllt bleiben. Das Volumen des verbleibenden Belags an Kohlenstoff-Vormaterial verringert sich noch weiter durch das anschließende Carbonisieren.

Umgekehrt zeigen Kohlenstoff-Vormaterialien in Form von Kohlenhydraten - wie etwa Zucker - zwar eine hohe Löslichkeit in Lösungsmittel, jedoch verliert der nach dem Verdampfen des Lösungsmittels verbleibende Zucker beim Carbonisierungsprozess bis zu 75 % seiner ursprünglichen Masse, so das auch hier ein großes Porenvolumen ungefüllt bleibt. Daher ergeben diese Kohlenstoff-Vormaterialien grundsätzlich nur geringe Stärken der abgelagerten Kohlenstoffschicht. Um technisch sinnvolle Wandstärken der porösen Kohlenstoffstruktur zu erzielen, sind daher in der Regel mehrere derartige Infiltrations- und Carbonisierungsprozesse nacheinander auszuführen. Solche Mehrfachprozesse erhöhen jedoch die Fertigungskosten und sie können Inhomogenitäten hervorrufen, etwa infolge der allmählichen Verstopfung von Infiltrationskanälen.

Um dieses Problem zu mindern, wird in der WO 201211966 A1 eine Modifikation der Herstellung von porösem Kohlenstoff unter Einsatz von porösem Templatmaterial mit hierarchischer Porenstruktur vorgeschlagen. Dabei werden vorab erzeugte Pulver sowohl aus dem porösen Templatmaterial als auch von der Vorläufersubstanz bereitgestellt, diese Pulver homogen miteinander vermischt und die homogene Pulvermischung so weit erhitzt, dass die Partikel der Vorläufersubstanz schmelzen und Vorläufersubstanz-Schmelze in die Poren des Templats eindringen kann. Auf ein Lösungsmittel für die Kohlenstoff-Vorläufersubstanz kann dabei verzichtet werden. Es stellt sich eine gleichmäßige Verteilung und Belegung über das gesamte zu infiltrierende Poren-Volumen des Templatmaterials ein, so dass sich ein auch bei nur einmaliger Infiltration bereits ein hoher Füllgrad des Porenvolumens ergibt.

Das Carbonisieren der Vorläufersubstanz erfolgt gleichzeitig oder anschließend zum Infiltrieren der Poren der Templat-Partikel. Die damit einhergehende Schrumpfung der Vorläufersubstanz ist auf die Zersetzungs- und Abdampfungsprozesse beim Carbonisieren zurückzuführen. Das anorganische Templatmaterial dient lediglich als mechanisch und thermisch stabiles Gerüst zum Ablagern und Carbonisieren der Kohlenstoff-Vorläufersubstanz.

Nach dem Entfernen, wie beispielsweise durch chemische Auflösung, ist das resultierende Kohlenstofferzeugnis im Wesentlichen frei von Templatmaterial. Es zeigt eine feingliedrig zerklüftete Oberfläche, die von einer Vielzahl zusammenhängender Poren und Hohlräume unterschiedlicher Größe kanalartig durchzogen ist.

Der Fachartikel "Nanocasting - A versatile Strategy for Creating Nanostructured Porous Materials" von An-Hui Lu, Ferdi Schüth; veröffentlicht in Adv. Mater. 2006 (18), 1793-1805; beschreibt ein Templatverfahren bei dem mesoporöses SiO₂ mit einer Vorläufersubstanz für Kohlenstoff infiltriert, carbonisiert und das SiO₂-Gerüst aufgelöst wird. Es wird mesoporöser Kohlenstoff erhalten.

### Technische Aufgabenstellung

Der Erfindung liegt die Aufgabe zugrunde, ein Verfahren bereitzustellen, das eine kostengünstige Herstellung einer Kohlenstoffstruktur mit hierarchischer Porosität mit einem hohen Anteil an Mesoporen mit Porengrößen im Bereich von 2 bis 50 nm ermöglicht.

### Allgemeine Beschreibung der Erfindung

Diese Aufgabe wird ausgehend von einem Verfahren der eingangs genannten Gattung erfindungsgemäß dadurch gelöst, dass die Vorläufersubstanz nach dem Infiltrieren gemäß Verfahrensschritt (c) und vor dem Carbonisieren gemäß Verfahrensschritt (d) innerhalb der Makroporen des Templats einer Behandlung bei einer Schaumbildungstemperatur Tb unterzogen wird, bei der die Vorläufersubstanz unter Polykondensation aufschäumt und dabei die Makroporen als feinporigen Schaum auffüllt, der nach dem Carbonisieren eine Poren-haltige schaumartige Kohlenstoffstruktur bildet, bei der mindestens 70 % der Poren Porengrößen im Bereich von 10 bis 150 nm haben.

Wie auch bei den bekannten Methoden wird die Kohlenstoff-Vorläufersubstanz - wie etwa Saccharose - bei einer vergleichsweise niedrigen Temperatur Ta als Schmelze oder in gelöster Form in Kontakt mit dem Templat gebracht, so dass es in die Poren desselben eindringen und diese mindestens teilweise auffüllen kann. Dabei bildet die Kohlenstoff-Vorläufersubstanz an den Wandungen der infiltrierten Poren eine schichtförmige Ablagerung.

Die Ablagerung wird bei den bekannten Methoden anschließend durch Carbonisieren in graphitischen, graphitähnlichen oder turbostratischen Kohlenstoff umgesetzt. Das Carbonisieren erfolgt durch Aufheizen der Ablagerung auf eine vergleichsweise hohe Temperatur Tc, typischerweise mehr als 400 °C.

Im Unterschied dazu ist beim erfindungsgemäßen Verfahren dem Carbonisieren eine gesonderte Behandlung der abgelagerten Schicht bei einer niedrigeren Temperatur Tb vorgeschaltet. Diese Behandlung soll ein möglichst vollständiges und gleichmäßiges Aufschäumen des abgelagerten Schichtmaterials vor dem Carbonisieren bewirken und sie beansprucht deswegen eine gewisse Haltedauer. Durch die Schaumbildung vergrößert sich das Volumen der Ablagerungen, so dass die Poren mindestens teilweise und im Idealfall vollständig mit Schaum aufgefüllt werden. Dieser Effekt ist auch bei anderen Schaumwerkstoffen bekannt - beispielsweise bei Polyurethanschaum zum Einsatz im Baubereich. Die Schaumbildung beruht auf Abspaltung funktioneller Gruppen bei der Polymerisation der Vorläufersubstanz, welche bei Tb gasförmige Komponenten bilden, wie etwa Wasser oder Kohlendoxid. Damit das freigesetzte Gas in der Vorläufersubstanz Blasen bilden kann, muss die Vorläufersubstanz bei der Temperatur Tb noch plastisch verformbar sein.

Diese Polykondensationsreaktion kann thermisch aktiviert werden, wobei die Starttemperatur auch von Umgebungsparametern wie dem Druck und der Atmosphäre abhängt und durch Fremdsubstanzen katalytisch begünstigt oder gehemmt sein kann. Die Reaktion selbst läuft typischerweise innerhalb eines Temperaturbereichs ab. Der Behandlungstemperatur Tb ist daher keine konkrete Temperatur zuzuordnen, sondern sie liegt in einem Temperaturbereich, innerhalb dem die jeweilige Polykondensationsreaktion abläuft.

In der Regel gilt aber Ta < Tb < Tc. Zeigt die Vorläufersubstanz eine diskrete Schmelztemperatur Ta, so liegt diese in der Regel unterhalb von Tb. Häufig ist der Vorläufersubstanz jedoch ein Schmelzbereich zuzuordnen, der sich gegebenenfalls mit dem Schmelzbereich für Tb überschneiden kann.

Die Behandlung der abgelagerten Vorläufersubstanz erfolgt somit bei einer Temperatur Tb, die dadurch gekennzeichnet ist, dass das Freisetzen von Gas aus der Vorläufersubstanz erfolgt und dass die Vorläufersubstanz gleichzeitig noch plastisch verformbar ist

Der sich dabei bildende Schaum ist feinblasig in dem Sinne, dass er im Wesentlichen (mindestens 70 % der Blasen) Blasen im Mesoporenbereich mit Blasendurchmessern bis etwa 150 nm enthält. Bei der aus dem feinblasigen Schaum durch Carbonisieren erhaltenen feinporigen Kohlenstoffstruktur haben mindestens 70% der Poren Porengrößen im Bereich von 10 bis 150 nm. Etwaige Mikroporen mit Porengrößen von weniger als 2 nm werden dabei nicht berücksichtigt. Da die Poren zum größten Teil im Größenbereich von Mesoporen liegen (Mesoporen haben definitionsgemäß Porengrößen zwischen 2 und 50 nm) wird diese poröse Masse im Folgenden auch als "mesoporiger Kohlenstoffschaum" bezeichnet. Damit diese feinporige, schaumartige Porenstruktur entsteht, ist eine Begrenzung des Blasenwachstums bei der Schaumbildung erforderlich. Die Begrenzung beruht auf zwei Maßnahmen.

Zum einen wird das Blasenwachstum bereits durch die Größe der Makroporen des Templatmaterials und durch die Menge der in die Poren eingebrachten Vorläufersubstanz begrenzt. Die mittlere Porengröße der Makroporen ist daher möglichst klein und liegt typischerweise um 400 nm bis etwa 1000 nm. Zum anderen findet die Blasenbildung über das Volumen der Ablagerungen von Vorläufersubstanz im Idealfall gleichmäßig statt, was durch möglichst geringe räumliche Temperaturunterschiede begünstigt wird. Ein geringer Temperaturgradient wird durch Haltezeiten und flache Temperaturrampen im Temperaturbereich um Tb erreicht.

Im Hinblick darauf hat es sich als günstig erwiesen, wenn die Schaumbildungs-temperatur Tb eine Temperaturintervall von maximal 100 °C, vorzugsweise von maximal 50 °C umfasst und dass die Behandlungsdauer bei der Schaumbildungstemperatur Tb mindestens 10 min, vorzugsweise mindestens 30 min beträgt.

Vorzugsweise wird eine Vorläufersubstanz eingesetzt, die bei der Schaumbildungsbehandlung mindestens 30 %, besonders bevorzugt mindestens 50 % ihrer Ausgangsmasse vor der Polykondensationsreaktion als Gas abspaltet.

Je größer das abgespaltene Gasvolumen ist, umso höher ist die Porosität der Vorläufersubstanz nach dem Carbonisieren.

Als Vorläufersubstanz für den hochporösen Kohlenstoff sind grundsätzlich schmelzbare organische Kohlenstoffverbindungen mit einem gewissen Anteil an abspaltbarem Kondensat geeignet. Dazugehören auch Peche, sofern diese durch Polykondensation zersetzbar sind, wie etwa Petroleumpech.

Vorzugsweise wird als Kohlenstoff-Vorläufersubstanz jedoch Kohlenhydrat eingesetzt.

Kohlenhydrate, insbesondere Zucker, wie Saccharose, Fructose oder Glucose, sind schmelzbar und haben einen hohen Wasseranteil, der bei der Polymerisation als Reaktionsprodukt entsteht und zur Blasenbildung beiträgt. Sie stellen nichtgraphitische Kohlenstoff-Vorläufersubstanzen dar, die sich nach dem Carbonisieren durch eine hohe spezifische Oberfläche auszeichnen.

Es hat sich bewährt, wenn Templat-Partikel mit nicht sphärischer Morphologie eingesetzt werden, die plättchenförmig oder stäbchenförmig mit einem Strukturverhältnis von mindestens 5, vorzugsweise von mindestens 10 ausgebildet sind, und die eine mittlere Dicke im Bereich von 5 µm bis 100 µm, besonders bevorzugt weniger als 50 µm aufweisen.

Unter dem "Strukturverhältnis" wird das Verhältnis von größter Strukturbreite des Partikels und seiner Dicke verstanden. Ein Strukturverhältnis von mindestens 5 bedeutet demnach, dass die größte Strukturbreite eines Partikels mindestens 5mal größer ist als seine Dicke. Derartige Partikel haben im Wesentlichen Plättchen- oder Stäbchenform und zeichnen sich durch zwei im Wesentlichen parallel verlaufende große Oberflächen aus, über die das Infiltrieren der schmelzflüssigen Vorläufersubstanz relativ schnell erfolgen kann, da die Dicke des aufzufüllenden Volumens vergleichsweise gering ist, vorzugsweise weniger als 100 µm und bevorzugt zwischen 10 und 50 µm.

Templat-Partikel mit einer Dicke von weniger als 10 µm haben eine geringe mechanische Festigkeit und erschweren die Ausbildung einer ausgeprägten Hierarchischen Porenstruktur. Bei Dicken von mehr als 100 µm wird es zunehmend schwierig, eine homogene Infiltration mit der schmelzflüssigen Vorläufersubstanz zu gewährleisten.

Bei einer vorteilhaften Verfahrensweise ist vorgesehen, dass die Vorläufersubstanz in Form von Vorläufersubstanz-Partikeln aus einem Material bereitgestellt wird, das eine Schmelztemperatur unterhalb von Ta aufweist, und dass die Vorläufersubstanz-Partikel mit den Templat-Partikeln in einem Massenverhältnis im Bereich zwischen 0,05 und 1,6, vorzugsweise in einem Massenverhältnis im Bereich zwischen 0,1 und 0,8 miteinander gemischt werden.

Hierbei werden Vorläufersubstanz-Partikel - vorzugsweise in Form von Pechen - und Templat-Partikel vorab gemischt und die Partikel-Mischung erhitzt, so dass die Vorläufersubstanz schmilzt und in schmelzflüssige Phase in die Poren des Templats eindringen kann. Durch das Mischungsverhältnis von Vorläufersubstanz und Templatmaterial wird der Befüllungsgrad der Poren eingestellt. Bei einem Mischungsverhältnis von 0,05 sind die inneren Oberflächen des Templatmaterials mit nur einer Schicht geringer Dicke belegt, so dass sich lediglich ein schwammartiges Gespinst aus Kohlenstoff ergibt. Noch kleinere Mischungsverhältnisse sind daher nicht bevorzugt. Beim Mischungsverhältnis von 1,6 ergibt sich hingegen eine im Wesentlichen gefüllte Porenstruktur, abhängig vom ursprünglichen Porenvolumen des Templatmaterials.

Als Templatmaterial kommen Harttemplate aus oxidischen, nitridischen, carbidischen Werkstoffen in Frage, aber auch Template aus anderen Substanzen, wie Kunststoffe. Vorzugsweise ist das Templatmaterial SiO₂.

Synthetisches SiO₂ ist mittels Sootabscheideverfahren unter Einsatz preiswerter Ausgangssubstanzen im industriellen Maßstab relativ kostengünstig herstellbar. Das SiO₂-Templat hält hohen Temperaturen beim Carbonisieren stand und ist bis mindestens 1000 °C chemisch inert. Die Temperaturobergrenze wird durch das Einsetzen der Reaktion von SiO₂ mit Kohlenstoff zu SiC (bei etwa 1000 °C) vorgegeben. Das Entfernen des Templatmaterials in Form von synthetischem SiO₂ gemäß Verfahrensschritt (e) erfolgt durch chemische Auflösung.

Je feinteiliger die Templat-Partikel sind, umso schneller, effektiver und gleichmäßiger erfolgt die Infiltration bei ansonsten gleichen Prozessbedingungen. Die Templat-Partikel werden beispielsweise durch Aufmahlen poröser Körper aus dem Templatmaterial oder durch Brechen von Schichten aus dem Templatmaterial hergestellt, durch Pressen eines Pulvers aus dem Templatmaterial oder durch Sol-Gel-Verfahren oder Granulationsverfahren hergestellt. Für das erfindungsgemäße Verfahren ist eine schmale, im Idealfall monodisperse Partikelgrößenverteilung vorteilhaft, die beispielsweise durch Sieben erzielt wird.

Es hat sich als besonders vorteilhaft erwiesen, wenn das Bereitstellen der Templat-Partikel einen Soot-Abscheideprozess umfasst, bei dem ein Einsatzmaterial durch Hydrolyse oder Pyrolyse zu Templatmaterialteilchen umgesetzt und diese auf einer Ablagerungsfläche unter Bildung eines Sootkörpers aus dem Templatmaterial abgeschieden werden, und dass der Sootkörper zu den Templat-Partikeln zerkleinert wird.

Bei dieser Variante des erfindungsgemäßen Verfahrens umfasst die Herstellung des Templats einen Sootabscheideprozess. Dabei wird eine flüssige oder gasförmige Ausgangssubstanz einer chemischen Reaktion (Hydrolyse oder Pyrolyse) unterzogen und aus der Gasphase als Feststoffkomponente auf einer Ablagerungsfläche abgeschieden. Die Reaktionszone ist beispielsweise eine Brennerflamme oder ein Lichtbogen (Plasma). Mittels derartiger Plasma- oder CVD-Sootabscheideverfahren, die beispielsweise unter den Bezeichnungen OVD- oder VAD-Verfahren bekannt sind, werden im industriellen Maßstab synthetisches Quarzglas, Zinnoxid, Titanoxid, Titannitrid und andere synthetische Werkstoffe hergestellt.

Dabei ist es für die Eignung des abgeschiedenen Templatmaterials zur Herstellung eines Templats wesentlich, dass das Templatmaterial auf der Ablagerungsfläche, bei der es sich beispielsweise um ein Gefäß, einen Dorn, eine Platte oder einen Filter handeln kann, als poröser "Ruß" (hier als "Soot" bezeichnet) anfällt. Dies wird gewährleistet, indem die Temperatur der Ablagerungsfläche so niedrig gehalten wird, dass ein Dichtsintern des abgeschiedenen Templatmaterials verhindert wird. Als Zwischenprodukt wird ein so thermisch verfestigter aber poröser "Sootkörper" erhalten.

Bei dem Sootabscheideverfahren handelt es sich im Vergleich zu dem Herstellungsverfahren über die "Sol-Gel-Route" um ein preiswertes Verfahren, das eine kostengünstige Herstellung von Templaten im industriellen Maßstab ermöglicht.

Bei den so erhaltenen Sootkörpern erweist es sich als besonders günstig, dass diese herstellungsbedingt eine anisotrope Masseverteilung mit hierarchischer Porenstruktur aufweisen. Denn bei der Gasphasenabscheidung entstehen in der Reaktionszone Primärpartikel des Templatmaterials mit Partikelgrößen im Nanometerbereich, die sich auf ihrem Weg zur Ablagerungsfläche zusammenlagern und in Form mehr oder weniger sphärischer Agglomerate oder Aggregate auf der Ablagerungsfläche anfallen, die im Folgenden auch als "Sekundärteilchen" bezeichnet werden. Innerhalb der Primärpartikel und innerhalb der Sekundärteilchen - also zwischen den Primärpartikeln - liegen besonders kleine Hohlräume und Poren im Nanometerbereich vor, also so genannte Mesoporen, wohingegen sich zwischen den einzelnen Sekundärteilchen größerer Hohlräume oder Poren ausbilden.

Die daraus durch Zerbrechen oder Zermahlen erhaltenen Templat-Partikel zeigen ebenfalls die im Templatmaterial vorgegebene hierarchische Struktur mit oligomodaler Porengrößenverteilung.

Beim Sootabscheideprozess kann das Templatmaterial auch in Form von Sootpulver anfallen, das anschließend anhand von Granulations-, Press-, Schlicker- oder Sinterverfahren zu den Templat-Partikeln weiterverarbeitet wird. Als Zwischenprodukte sind Granulate oder Schülpen zu nennen.

Die durch Sootabscheidung erzeugte Schicht des Templatmaterials kann mit geringem Aufwand zerkleinert werden, wobei Templat-Partikel mit plättchenartiger oder flockenartigen Morphologie erhalten werden.

Derartige Templat-Partikel, die sich durch eine nicht sphärische Morphologie auszeichnen, sind für den Einsatz im erfindungsgemäßen Verfahren besonders vorteilhaft.

Denn Partikel mit sphärischer Morphologie, also Partikel mit einer Kugelform oder annähernd kugelförmiger Morphologie zeigen eine geringe Oberfläche in Bezug auf ihr Volumen. Demgegenüber zeigen Partikel mit nicht sphärischer Morphologie ein größeres Verhältnis von Oberfläche zu Volumen, was die Infiltration mit der Vorläufersubstanz vereinfacht und vergleichmäßigt.

### Ausführungsbeispiel

Nachfolgend wird die Erfindung anhand eines Ausführungsbeispiels und einer Zeichnung näher erläutert. Im Einzelnen zeigt
- **Figur 1**: eine Vorrichtung zur Herstellung eines SiO₂-Sootkörpers in schematischer Darstellung,
- **Figur 2**: ein Heizprofil zum Schmelzen der Vorläufersubstanz, zur Schaumbildung und zum Carbonisieren,
- **Figur 3**: eine REM-Aufnahme einer Ausführungsform des nach dem erfindungsgemäßen Verfahren erhaltenen porösen Kohlenstofferzeugnisses mit hierarchischer Porenstruktur, und
- **Figur 4**: ein Diagramm zur Porengrößenverteilung des porösen Kohlenstofferzeugnisses gemäß der Erfindung

### Herstellen von Templatmaterial mit hierarchischer Porenstruktur

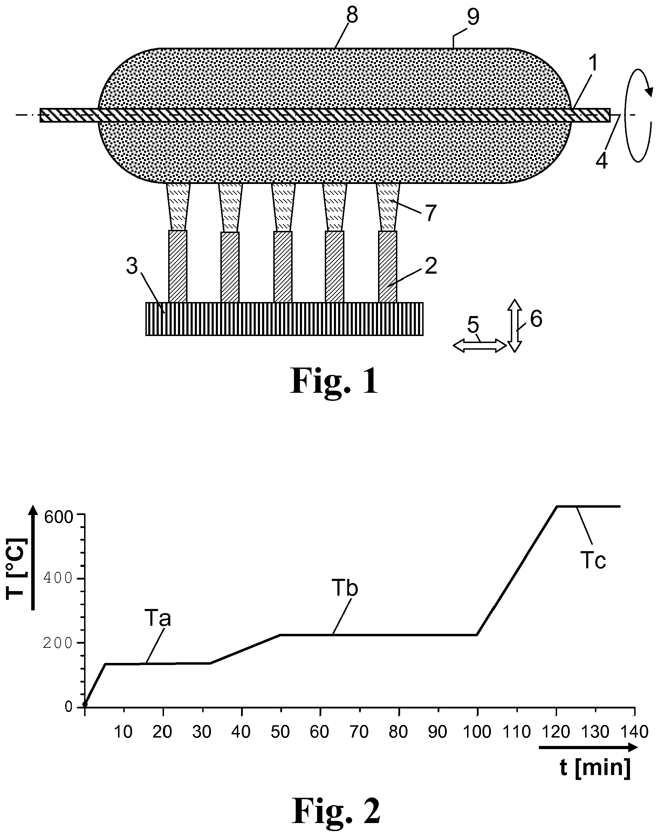

Die in **Figur 1** dargestellte Vorrichtung dient zur Herstellung eines SiO₂-Sootkörpers. Entlang eines Trägerrohres 1 aus Aluminiumoxid ist eine Vielzahl in einer Reihe angeordneter Flammhydrolysebrenner 2 angeordnet. Die Flammhydrolysebrenner 2 sind auf einem gemeinsamen Brennerblock 3 montiert, der parallel zur Längsachse 4 des Trägerrohrs 1 zwischen zwei, in Bezug auf die Längsachse 4 ortsfesten Wendepunkten hin- und herbewegt wird und der senkrecht dazu verschiebbar ist, wie dies die Richtungspfeile 5 und 6 andeuten. Die Brenner 2 bestehen aus Quarzglas; ihr Abstand zueinander beträgt 15 cm.

Den Flammhydrolysebrennern 2 ist jeweils eine Brennerflamme 7 zugeordnet, deren Hauptausbreitungsrichtung senkrecht zur Längsachse 4 des Trägerrohrs 1 verläuft. Mittels der Flammhydrolysebrenner 2 werden auf der Zylindermantelfläche des um seine Längsachse 4 rotierenden Trägerrohrs 1 SiO₂-Partikel abgeschieden, so dass schichtweise der poröse SiO₂-Rohling 8 mit einem Außendurchmesser von 400 mm aufgebaut wird. Die einzelnen SiO₂-Sootlagen haben im Mittel eine Dicke um 50 µm.

Den Flammhydrolysebrennern 2 werden jeweils als Brennergase Sauerstoff und Wasserstoff zugeführt sowie SiCl₄ als Einsatzmaterial für die Bildung der SiO₂-Partikel. Der Brennerblock 3 wird dabei mit einer Amplitude von zwei Brennerabständen (als 30 cm) hin- und herbewegt. Während des Abscheideprozesses stellt sich auf der Rohlingoberfläche 9 eine mittlere Temperatur von etwa 1200 °C ein.

Nach Abschluss des Abscheideprozesses wird ein Rohr aus porösem SiO₂-Soot (Sootrohr) mit einer Länge von 3 m, einem Außendurchmesser von 400 mm und einem Innendurchmesser von 50 mm erhalten. Das Temperatur beim Aufbau des Sootkörpers wird vergleichsweise niedrig gehalten, so dass das SiO₂-Sootmaterial eine geringe mittlere relative Dichte von 22 % (bezogen auf die Dichte von Quarzglas 2,21 g/cm³) hat.

Wegen der geringen Dichte lässt sich das poröse Sootmaterial leicht zerkleinern. Infolge des schichtweisen Aufbaus des Sootkörpers neigen aufeinander liegende Schichten bei hohen mechanischen Kräften zur Ablation, so dass beim Zermahlen plättchen- oder flockenähnliche Sootpartikel mit einer Dicke im Bereich von 20 und 50 µm erhalten werden. Diese Sootpartikel werden im weiteren Herstellungsprozess als Templatmaterial-Partikel eingesetzt

Die Sootpartikel zeigen herstellungsbedingt eine anisotrope Masseverteilung mit hierarchischer Porenstruktur. Dies ist darauf zurückzuführen, dass bei der Gasphasenabscheidung in der Reaktionszone SiO₂-Primärpartikel mit Partikelgrößen im Nanometerbereich entstehen, die sich auf ihrem Weg zur Ablagerungsfläche zusammenlagern und in Form mehr oder weniger sphärischer Agglomerate oder Aggregate auf der Ablagerungsfläche anfallen. Diese "Sekundärteilchen" bestehen aus einer unterschiedlichen Anzahl von Primärpartikeln und zeigen daher grundsätzlich eine breite Teilchengrößenverteilung. Innerhalb der Sekundärteilchen - zwischen den Primärpartikeln - liegen besonders kleine Hohlräume und Poren im Nanometerbereich vor, also so genannte Mesoporen, wohingegen sich zwischen den einzelnen Sekundärteilchen Makroporen mit typischen lichten Weiten um 400 nm bis 1.000 nm ausbilden.

### Herstellen einer Trockenmischung aus Partikeln des Templatmaterials und einer schaumbildungsfähigen Kohlenstoff-Vorläufersubstanz

Durch Mahlen von Rohrzucker und Absieben wird eine feinkörnige Rohrzuckerpulverfraktion erzeugt, die im Wesentlichen aus sphärischen Partikeln mit Partikelgrößen zwischen 5 und 20 µm besteht. Die Rohrzucker- und die Sootpartikel werden im Gewichtsverhältnis 25:75 homogen miteinander vermischt.

### Aufschmelzen der Partikelmischunq und Infiltration

Die Partikel-Mischung wird auf eine Temperatur von etwa 160°C erhitzt (entspricht der Temperatur Ta). Rohrzucker wird dabei zähflüssig und beginnt, sich zu zersetzen. Gleichzeitig umhüllt die zähflüssige Rohrzuckerschmelze die kleinen SiO₂-Sootpartikel und dringt in die Poren ein. Das Verhältnis von Rohrzucker- und Sootpartikelmasse ist so gewählt, dass die Rohrzuckerschmelze die Poren füllt, so dass kein nennenswertes freies Porenvolumen mehr übrig bleibt und dabei nahezu vollständig verbraucht wird. Nach einer Infiltrationsdauer von etwa 30 min ist die Infiltration der Poren weitgehend abgeschlossen. Die Poren der Sootpartikel sind nun weitgehend mit einer schmelzflüssigen Rohrzuckerschicht gefüllt.

### Schaumbiidunosprozess

Danach wird die Temperatur langsam auf etwa 205 °C erhöht (entspricht der Temperatur Tb) und etwa 60 min gehalten. Bei dieser Temperatur unterliegt Rohrzucker unter dehydrierenden Bedingungen einer rasch ablaufenden Polykondensationsreaktion unter Abspaltung von Wasser. Bis zur vollständigen Umwandlung in Kohlenstoff ist die verbleibende Rohrzucker-Schmelze noch weitgehend plastisch verformbar. Dadurch führt kann das in der Polykondensationsreaktion freigesetzte und abdampfende Wasser eine Blasenbildung bewirken, die sich als Schaumbildung des Rohrzuckers zeigt.

Diese Blasenbildung kann unter unkontrollierten Bedingungen zu einer inhomogenen Blasenbildung mit großen Blasen innerhalb der Makroporosität der Templat-Partikel führen, die bei der Erfindung jedoch unerwünscht sind. Große Blasen werden durch die beschriebene schonende Behandlung des Rohrzuckers bei der Temperatur Tb vermieden. Denn dadurch bilden sich gleichzeitig an einer Vielzahl von Stellen erste Blasenkeime, die ein vergleichsweise langsames Blasenwachstum erfahren und deren Wachstum zudem durch die Porengröße des Templatmaterials beschränkt ist. Unter diesen Randbedingungen wird eine Schaumbildung erzielt, bei der die Blasen im Wesentlichen (mindestens 70% der Blasen) Größen um 10 bis 150 nm haben und dabei die Makroporen des Templatmaterials infolge eines vergleichsweise hohen Blasenvolumens mindestens teilweise und im Idealfall vollständig mit Schaum auffüllen.

### Carbonisieren

Nach Abschluss des Schaumbildungsprozesses wird die Behandlungstemperatur auf etwa 650 °C erhöht (entspricht der Temperatur Tc) und der vorab aufgeschäumte Rohrzucker in Stickstoff-Atmosphäre zu porösem, turbostratischem Kohlenstoff carbonisiert. Spätesten bei diesem Verfahrensschritt wird die schaumartige mesoporige Blasenstruktur offenporig, da bisher eingeschlossene Gase entweichen.

Nach vollständiger Carbonisierung wird eine Kompositmasse aus porösen SiO₂-Sootpartikeln, die außen und innen (das heißt, innerhalb ihrer Poren) mit einer Lage aus ebenfalls porösem Kohlenstoffschaum belegt sind, erhalten. Die Porosität des Kohlenstoffschaums wird überwiegend (mindestens 70 % der Poren) von Poren mit Porengrößen im Bereich von 10 bis 150 nm gebildet.

Das Diagramm von **Figur 2** zeigt das Heizprofil (Temperatur T in °C über der Zeit t in Minuten) der oben erläuterten thermischen Behandlungsschritte. Besonders wichtig für eine gleichmäßigen und homogenen Schaumbildung innerhalb des von den Makroporen des Templatmaterials vorgegeben Volumens ist der insgesamt langsame Aufheizprozess der schmelzflüssigen Rohrzuckerphase auf die Schaumbildungs-Temperatur Tb.

### Entfernen des Templatmaterials

Das SiO₂-Sootmaterial wird anschließend entfernt, indem die Kompositmasse in ein Flusssäurebad eingebracht wird. Nach dem Wegätzen der SiO₂-Partikel wird das Material gespült, getrocknet und zerkleinert, wobei es zu Flocken aus porösem Kohlenstoff zerfällt, dessen Struktur im Wesentlichen einen Negativabdruck der ursprünglichen SiO₂-Sootpartikel darstellt. Das vorher von SiO₂ belegte netzwerkartige Volumen bildet nun einen zusätzlichen, kanalartigen Makro-Porenraum um den im Wesentlichen mesoporigen Kohlenstoffschaum. Das so erhaltene Kohlenstofferzeugnis zeichnet sich daher durch eine hierarchische Porenstruktur aus, bei der eine Vielzahl von miteinander verbundenen Porenkanälen (Makroporen) eine ansonsten feinporige Masse (überwiegend Mesoporen) durchziehen.

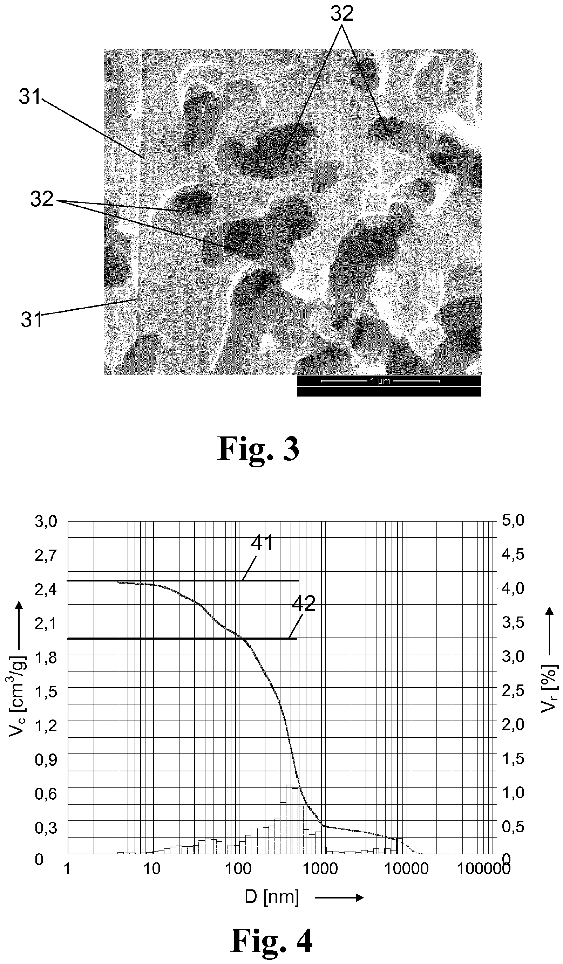

Die REM-Aufnahme gemäß **Figur 3** zeigt die so erhaltene Kohlenstoffstruktur mit einer Vielzahl zusammenhängender Poren und Hohlräume unterschiedlicher Größe. Bei der von feinen Poren durchzogenen, schwammartigen Masse 31 haben nahezu 100 % der Poren Porengrößen im Bereich von 10 bis 150 nm. Diese schwamm- oder schaumartige Masse 31 ist von größeren Hohlräumen 32 umgeben und wird von diesen kanalartig durchzogen. Eine Messung der spezifischen inneren Oberfläche der Kohlenstoffstruktur nach der BET-Methode ergibt Messwerte um 450 m²/g.

Die "spezifische Oberfläche (BET)" wird nach der Methode von Brunauer, Emmet und Teller (BET) anhand der DIN 66132 ermittelt und basiert auf Gasabsorption an der zu messenden Oberfläche.

Das Diagramm von **Figur 4** zeigt die Porengrößenverteilung des Kohlenstofferzeugnisses. Auf der linken Ordinate ist das kumulative Porenvolumen V_{c} in [cm³/g] und auf der rechten Ordinate das relative Porenvolumen Vᵣ in [%] gegen den Porendurchmesser D in [nm] aufgetragen. Es ist erkennbar, dass ein erstes Maximum der Porengrößenverteilung im Mesoporenbereich um 50 nm liegt und dass Poren mit Porengrößen bis 100 nm (Linie 42) etwa 0,53 cm³/g ausmachen (Differenz des kumulativen Porenvolumens zwischen den Linien 41 und 42), was einem Anteil am Gesamt-Porenvolumen (etwa 2,45 cm³/g) von rund 20 % entspricht. Dieses Porenvolumen ist vorwiegend dem "mesoporigen Kohlenstoffschaum" zuzurechnen. Das zweite Maximum der Porengrößenverteilung liegt im Makroporenbereich um 400 nm, was im Wesentlichen auf Hohlräume zurückzuführen ist, die durch das Entfernen von Templatmaterial freigelegt worden sind.

Das Porenvolumen bezeichnet das von Hohlräumen belegte, freie Volumen innerhalb des Materials. Das Porenvolumen wird mittels eines Porosimeters gemessen, wobei eine nicht benetzende Flüssigkeit (Quecksilber) unter Einwirkung eines äußeren Druckes in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen), jedoch nicht "Mikroporen" mit Porengrößen von weniger als 2 nm.

Das so erhaltene Kohlenstofferzeugnis ist relativ filigran und fragil. Beispielsweise für den Einsatz als Elektrodenmaterial für elektrochemische Zellen in Batterien und Sekundärbatterien ist es sehr gut geeignet. Da das nicht am elektrochemischen Prozess teilnehmende Templatmaterial entfernt ist, trägt es nicht zum Gewicht der Zelle bei. Für Anwendungen, bei denen eine höhere mechanische Stabilität erwünscht ist, kann Templatmaterial teilweise oder vollständig beibehalten werden.

## Patentansprüche

1. Verfahren zur Herstellung eines porösen Kohlenstofferzeugnisses, umfassend folgende Verfahrensschritte:
(a) Bereitstellen von Templatmaterial in Form von Templat-Partikeln, die Makroporen enthalten,
(b) Bereitstellen einer Vorläufersubstanz für Kohlenstoff,
(c) Infiltrieren der Makroporen des Templats mit der Vorläufersubstanz in geschmolzener oder gelöster Form bei einer Temperatur Ta,
(d) Carbonisieren der Vorläufersubstanz bei einer Temperatur Tc, und
(e) Entfernen des Templats unter Bildung des porösen Kohlenstofferzeugnisses,
**dadurch gekennzeichnet, dass** die Vorläufersubstanz nach dem Infiltrieren gemäß Verfahrensschritt (c) und vor dem Carbonisieren gemäß Verfahrensschritt (d) innerhalb der Makroporen des Templats einer Behandlung bei einer Schaumbildungstemperatur Tb unterzogen wird, bei der die Vorläufersubstanz unter Polykondensation aufschäumt und dabei die Makroporen als feinporigen Schaum auffüllt, der nach dem Carbonisieren eine Poren-haltige Kohlenstoffstruktur bildet, bei der mindestens 70 % der Poren Porengrößen im Bereich von 10 bis 150 nm haben.

2. Verfahren nach Anspruch 1, **dadurch gekennzeichnet, dass** die Schaumbildungstemperatur Tb ein Temperaturintervall von maximal 100 °C, vorzugsweise von maximal 50 °C umfasst und dass die Behandlungsdauer bei der Schaumbildungstemperatur Tb mindestens 10 min, vorzugsweise min 30 min beträgt.

3. Verfahren nach Anspruch 1 oder 2, **dadurch gekennzeichnet, dass** eine Vorläufersubstanz eingesetzt wird, die bei der Schaumbildungsbehandlung mindestens 30 %, vorzugsweise mindestens 50 % ihrer Ausgangsmasse vor der Polykondensationsreaktion als Gas abspaltet.

4. Verfahren nach einem der vorhergehenden Ansprüche, **dadurch gekennzeichnet, dass** Kohlenhydrat als Kohlenstoff-Vorläufersubstanz eingesetzt wird.

5. Verfahren nach einem der vorhergehenden Ansprüche, **dadurch gekennzeichnet, dass** Templat-Partikel mit nicht sphärischer Morphologie eingesetzt werden, die plättchenförmig oder stäbchenförmig mit einem Strukturverhältnis von mindestens 5, vorzugsweise von mindestens 10 ausgebildet sind, und die eine mittlere Dicke im Bereich von 5 µm bis 100 µm, besonders bevorzugt weniger als 50 µm aufweisen.

6. Verfahren nach einem der vorhergehenden Ansprüche, **dadurch gekennzeichnet, dass** die Vorläufersubstanz in Form von Vorläufersubstanz-Partikeln aus einem Material bereitgestellt wird, das eine Schmelztemperatur unterhalb von Ta aufweist, und dass die Vorläufersubstanz-Partikel mit den Templat-Partikeln in einem Massenverhältnis im Bereich zwischen 0,05 und 1,6, vorzugsweise in einem Massenverhältnis im Bereich zwischen 0,1 und 0,8 miteinander gemischt werden.

7. Verfahren nach einem der vorhergehenden Ansprüche, **dadurch gekennzeichnet, dass** das Templatmaterial SiO₂ ist.

8. Verfahren nach einem der vorhergehenden Ansprüche, **dadurch gekennzeichnet, dass** das Bereitstellen der Templat-Partikel einen Soot-Abscheideprozess umfasst, bei dem ein Einsatzmaterial durch Hydrolyse oder Pyrolyse zu Templatmaterialteilchen umgesetzt und diese auf einer Ablagerungsfläche unter Bildung eines Sootkörpers aus dem Templatmaterial abgeschieden werden, und dass der Sootkörper zu den Templat-Partikeln zerkleinert wird.

## Claims

1. A method for producing a porous carbon product, comprising the following method steps:
(a) providing template material in the form of template particles containing macropores,
(b) providing a precursor substance for carbon,
(c) infiltrating the macropores of the template with the precursor substance in melted or dissolved form at a temperature Ta,
(d) carbonizing the precursor substance at a temperature Tc, and
(e) removing the template so as to form the porous carbon product,
**characterized in that** after infiltration according to method step (c) and prior to carbonization according to method step (d) the precursor substance is subjected within the macropores of the template to a treatment at a foam formation temperature Tb at which the precursor substance foams under polycondensation and thereby fills the macropores as fine-pored foam which after carbonization forms a porous carbon structure in which at least 70% of the pores have pore sizes in the range of 10 nm to 150 nm.

2. The method according to claim 1, **characterized in that** the foam formation temperature Tb includes a temperature interval of not more than 100°C, preferably not more than 50°C, and that the treatment duration is at least 10 min, preferably at least 30 min, at the foam formation temperature Tb.

3. The method according to claim 1 or 2, **characterized in that** a precursor substance is used that during foam formation treatment separates at least 30%, preferably at least 50%, of its initial mass as gas prior to the polycondensation reaction.

4. The method according to any one of the preceding claims, **characterized in that** carbohydrate is used as the carbon precursor substance.

5. The method according to any one of the preceding claims, **characterized in that** template particles of non-spherical morphology are used that are formed as platelets or small rods with a structural ratio of at least 5, preferably of at least 10, and have a mean thickness in the range of 5 µm to 100 µm, particularly preferably less than 50 µm.

6. The method according to any one of the preceding claims, **characterized in that** the precursor substance is provided in the form of precursor substance particles of a material having a melting temperature below Ta, and that the precursor substance particles are mixed with the template particles in a mass ratio in the range between 0.05 and 1.6, preferably in a mass ratio in the range between 0.1 and 0.8.

7. The method according to any one of the preceding claims, **characterized in that** the template material is SiO₂.

8. The method according to any one of the preceding claims, **characterized in that** providing the template particles comprises a soot deposition process in which a feedstock material is converted by hydrolysis or pyrolysis into template material particles, and these are deposited on a deposition surface so as to form a soot body from the template material, and that the soot body is comminuted into the template particles.

## Revendications

1. Procédé de fabrication d'un produit poreux au carbone, comprenant les étapes de procédé suivantes :
(a) fourniture de matière matricielle sous forme de particules matricielles qui contiennent des macropores,
(b) fourniture d'un précurseur pour carbone,
(c) infiltration des macropores de la matrice avec le précurseur sous forme fondue ou dissoute, à une température Ta,
(d) carbonisation du précurseur à une température Tc, et
(e) retrait de la matrice avec formation du produit poreux au carbone,
**caractérisé en ce que** le précurseur, après l'infiltration selon l'étape de procédé (c) et avant la carbonisation selon l'étape de procédé (d), est soumis, à l'intérieur des macropores de la matrice, à un traitement à une température Tb de formation de mousse, à laquelle le précurseur mousse avec polycondensation et remplit les macropores en tant que mousse à fines pores, laquelle, après la carbonisation, forme une structure de carbone poreuse, dans laquelle au moins 70% des pores ont des tailles de pore situées dans la plage de 10 à 150 nm.

2. Procédé selon la revendication 1, **caractérisé en ce que** la température Tb de formation de mousse comprend un intervalle de température de maximum 100°C, de préférence de maximum 50°C, et **en ce que** la durée de traitement à la température Tb de formation de mousse est d'au moins 10 min, de préférence d'au moins 30 min.

3. Procédé selon la revendication1 ou 2, **caractérisé en ce qu'**un précurseur est utilisé, lequel, lors du traitement de formation de mousse, sépare en tant que gaz au moins 30%, de préférence au moins 50% de sa masse initiale avant la réaction de polycondensation.

4. Procédé selon l'une quelconque des revendications précédentes, **caractérisé en ce que** de l'hydrate de carbone est utilisé comme précurseur de carbone.

5. Procédé selon l'une quelconque des revendications précédentes, **caractérisé en ce que** des particules matricielles à morphologie non sphérique sont utilisées, lesquelles sont réalisées en forme de plaquette ou de bâtonnets avec un rapport de structure d'au moins 5, de préférence d'au moins 10, et lesquelles présente une épaisseur moyenne située dans la plage de 5 µm à 100 µm, de manière particulièrement préférée de moins de 50 µm.

6. Procédé selon l'une quelconque des revendications précédentes, **caractérisé en ce que** le précurseur est fourni sous forme de particules de précurseur à partir d'une matière qui présente une température de fusion située en dessous de Ta, et **en ce que** les particules de précurseur sont mélangées avec des particules matricielles dans un rapport de masse situé dans la plage comprise entre 0,05 et 1,6, de préférence dans un rapport de masse situé dans la plage comprise entre 0,1 et 0,8.

7. Procédé selon l'une quelconque des revendications précédentes, **caractérisé en ce que** la matière matricielle est du SiO₂.

8. Procédé selon l'une quelconque des revendications précédentes, **caractérisé en ce que** la fourniture des particules matricielles comprend un processus de séparation de suie, dans lequel une charge de départ est transformée par hydrolyse ou pyrolyse en particules matricielles et dans lequel celles-ci sont séparées de la matière matricielle sur une surface de dépôt avec formation d'un corps de suie, et **en ce que** le corps de suie est broyé en particules matricielles.
